# DEMANDE DE BREVET EUROPEEN

(11) **EP 0 889 246 A1**
(43) Date de publication de la demande: **07.01.1999**
(21) Numéro de dépôt: 98440145.5
(22) Date de dépôt: 02.07.1998
(51) Int. Cl.: F16B 2/08, F16L 3/233

(54) **Collier de serrage**

(30) Priorité: 04.07.1997 FR 9708696
(71) Demandeur: Fonderie Lemer, Z.I. de Garquefou, 44470 Garquefou (FR)
(72) Inventeur: Lemer, Jean-Pierre, 44000 Nantes (FR); Harin, Bertrand, 44000 Nantes (FR)
(74) Mandataire: Arbousse-Bastide, Jean-Claude Philippe

(57) **Abrégé**

Dispositif de collier de serrage en matière plastique ou analogue, utilisé pour maintenir entre-eux des fils ou des tubes, ou comme scellé.

Il comprend une partie (1) en forme de bande présentant sur au moins une face des crans transversaux (2), et à l'une des extrémités de la bande (1) un organe de blocage (3) comportant une fente transversale (30) pourvue intérieurement de moyens d'accrochage destinés à coopérer avec les crans (2) lorsque la bande (1) est introduite par son autre extrémité (41) dans la fente (30), la bande crantée (1) comporte au niveau de sa partie extrême (4) destinée à être introduite dans la fente (30), au moins une découpe longitudinale (40) permettant de séparer des parties (42, 43) qui, par pliage, sont susceptibles d'être disposées transversalement de part et d'autre de la bande (1) afin de constituer un moyen de préhension.

## Description

La présente invention a pour objet un dispositif de collier de serrage en matière plastique ou analogue, utilisé pour maintenir entre-eux des fils ou des tubes par exemple, ou comme scellé.

Un collier de serrage comprend de manière générale une partie en forme de bande présentant des crans transversaux sur l'une au moins de ses faces, et à l'une des extrémités de ladite bande, un organe de blocage comportant une fente transversale pourvue intérieurement de moyens d'accrochage destinés à coopérer avec lesdits crans lorsque ladite bande est introduite par son autre extrémité dans ladite fente.

En pratique, la bande est placée autour des objets à maintenir entre-eux, puis son extrémité libre est introduite dans la fente de l'organe de blocage, enfin, en exerçant une traction sur ladite extrémité on réalise le serrage, ladite extrémité libre ne présentant pas de crans sur une certaine longueur, afin de faciliter son introduction dans la fente.

Selon les colliers, et plus particulièrement selon la taille et la forme des crans et des moyens d'accrochage, le serrage est plus ou moins aisé à réaliser. Il est d'autant plus difficile que la bande est de petite section, puisqu'elle n'offre pas de prise.

Lorsqu'un collier de serrage est utilisé comme scellé, il est capital que le blocage soit irréversible, aussi les crans et les moyens de blocage sont conformés dans ce but, avec pour conséquence que l'effort nécessaire au serrage est important.

Afin de remédier à cet inconvénient, on a généralement recourt à une pince de type classique, ou à une pince destinée à cet usage particulier telle que celle décrite dans le document FR-A-2.1695.171 par exemple.

Cela présente toutefois l'inconvénient de nécessiter de disposer d'une pince qui , notamment lorsqu'elle est destinée à cet usage, ne convient pas forcément à toutes les dimensions de colliers.

La présente invention a pour but de proposer un dispositif de collier permettant de remédier à ces divers inconvénients.

Le dispositif objet de la présente invention se caractérise essentiellement en ce que la bande crantée comporte au niveau de sa partie extrême destinée à être introduite dans la fente de l'organe de blocage, au moins une découpe longitudinale permettant de séparer des parties qui, par pliage, sont susceptibles d'être disposées transversalement de part et d'autre de ladite bande afin de constituer un moyen de préhension.

Selon un premier mode de réalisation du dispositif selon l'invention, la ou les découpes sont prolongées jusqu'à l'extrémité de la partie extrême de la bande.

Selon un deuxième mode de réalisation du dispositif selon l'invention, la ou les découpes sont pratiquées à une certaine distance de la partie extrême, les brins longitudinaux ainsi créés peuvent être écartés afin de réaliser une boucle permettant le passage d'un moyen de traction.

Selon un troisième mode de réalisation du dispositif selon l'invention, la ou les découpes sont pratiquées à une certaine distance de la partie extrême, et l'un au moins des brins ainsi créés est sécable à proximité de son extrémité du côté de l'organe de blocage.

Après sectionnement de l'un des brins, le ou les autres sont pliés du côté de leur extrémité opposée à l'organe de blocage, afin de créer en extrémité de la bande, de part et d' autre de celle-ci, des extensions transversales, constituant un moyen de préhension.

Les avantages et les caractéristiques de la présente invention ressortiront plus clairement de la description qui suit et qui se rapporte au dessin annexé, lequel en représente plusieurs modes de réalisation non limitatifs.

Dans le dessin annexé :
- la figure 1 représente une vue en plan d'un premier mode de réalisation du dispositif de collier selon l'invention.
- la figure 2 représente une vue partielle en perspective du même dispositif.
- la figure 3 représente une vue partielle en perspective du même dispositif lors de son utilisation.
- la figure 4 représente une vue en plan d'un deuxième mode de réalisation du dispositif selon l'invention.
- la figure 5 représente une vue partielle en perspective du même dispositif.
- la figure 6 représente une vue partielle en perspective du même dispositif lors de son utilisation.
- la figure 7 représente une vue en plan d'un variante du même mode de réalisation du dispositif selon l'invention.
- la figure 8 représente une vue en plan d'un troisième mode de réalisation du dispositif selon l'invention.

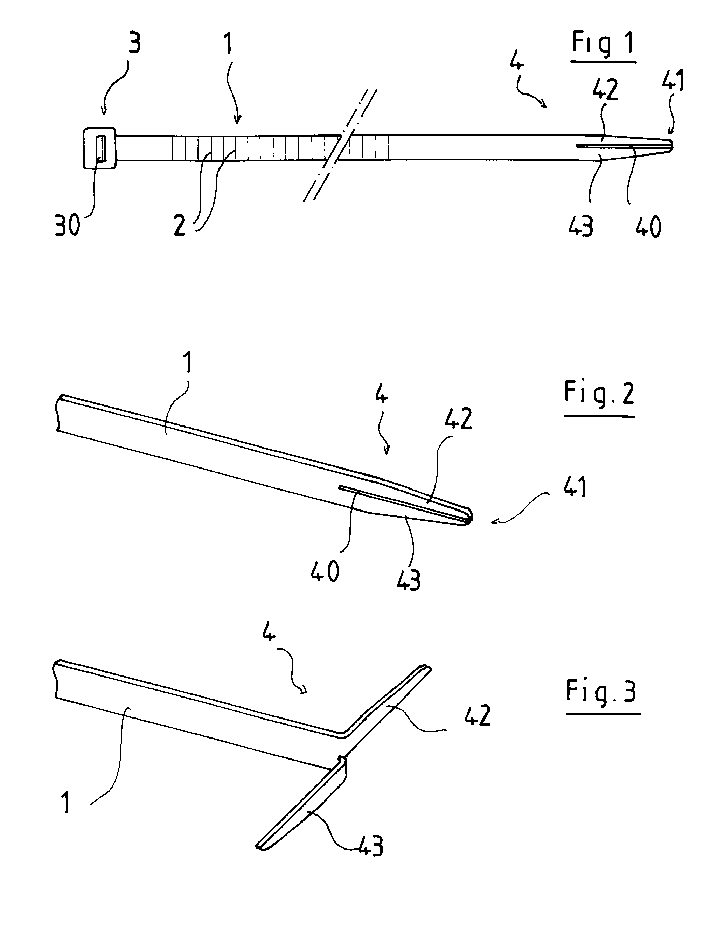

Si on se réfère à la figure 1, on peut voir que, selon un premier mode de réalisation, un dispositif de collier selon l'invention comporte de maniéré connue une partie 1 en forme de bande présentant sur une face des crans 2 et à l'une de ses extrémités un organe de blocage 3 pourvue d'une fente transversale 30 susceptible de recevoir en vue d'un blocage la bande 1 qui y est introduite par sa partie extrême libre 4, laquelle est lisse sur une certaine longueur.

Si on se réfère également à la figure 2, on peut voir que la partie extrême 4 présente une découpe longitudinale 40 se prolongeant jusqu'à l'extrémité 41 de la partie extrême 4, et séparant cette dernière en deux brins 42 et 43.

Si on se réfère maintenant à la figure 3, on peut voir qu'en pliant les deux brins 42 et 43 sensiblement à angle droit par rapport à la bande 1, chacun d'un côté de cette dernière, on obtient un moyen de préhension qu'il est aisé de serrer entre les doigts, c'est-à-dire que, par exemple, l'index et le majeur sont placés en arrière des brins 42 et 43, de part et d'autre de la bande 1, tandis que le pouce est placé contre les brins 42 et 43 en opposition à l'index et au majeur.

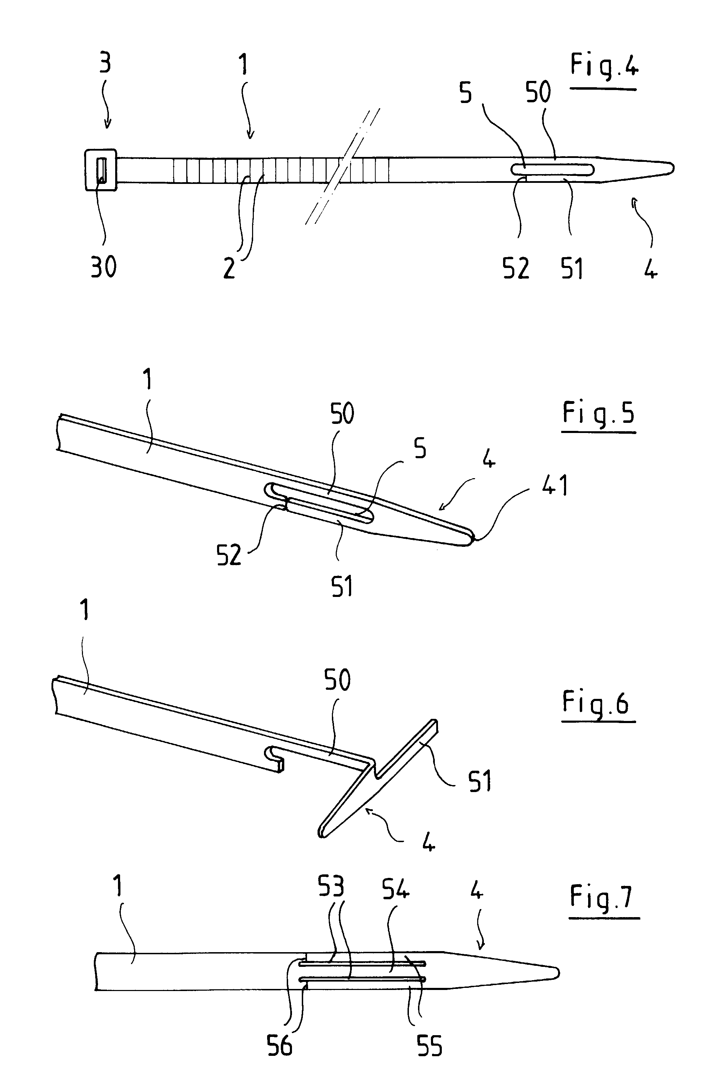

Si on se réfère maintenant aux figures 4 et 5, on peut voir selon un deuxième mode de réalisation, que la bande 1 d'un dispositif de collier selon l'invention présente longitudinalement non loin de sa partie extrême 4, une découpe 5 créant deux brins 50 et 51, dont l'un 51 comporte non loin de son extrémité opposée à l'extrémité 41, une zone de moindre résistance 52 destinée à permettre la section du brin 51.

On notera que selon des variantes, soit la zone de moindre résistance 52 n'existe pas et l'utilisateur se sert d'une pince coupante, soit le brin 51 est sectionné d'origine.

Si on se réfère maintenant à la figure 6 on peut voir qu'après section du brin 51, on procède au pliage, sensiblement à angle droit, du brin 50 non loin de la partie extrême 4, en sorte que cette dernière et le brin 51 s'étendent transversalement au bout du brin 50.

Ce pliage permet de créer un moyen de préhension facilitant la traction sur la bande 1, et qui est utilisé de la façon suivante, le brin 50 est engagé entre l'index et le majeur, tandis que le pouce prend appui contre la partie extrême 4 et le brin 51.

Si on se réfère maintenant à la figure 7 on peut voir que selon une variante du dispositif selon l'invention, deux découpes 53 parallèles sont pratiquées dans la bande 1, en sorte que cela crée un brin central 54, et deux brins latéraux 55, ces derniers comportant chacun une zone de moindre résistance 56.

En utilisation on procède de la même manière que précédemment, à savoir que les brins latéraux 55 sont sectionnés et que le brin central 54 est plié, avec comme avantage de permettre une traction dans l'axe de la bande 1.

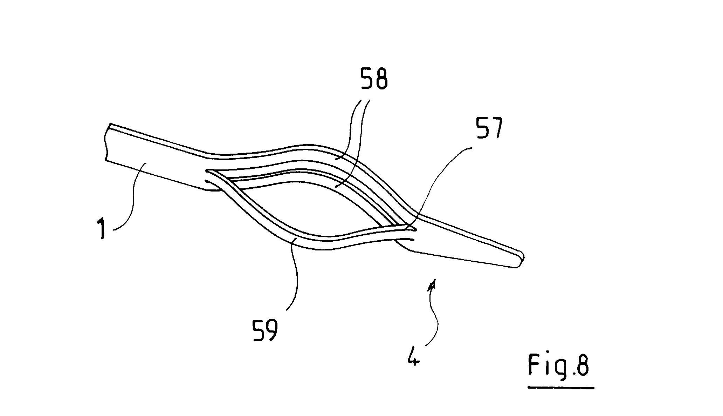

Si on se réfère maintenant à la figure 8, on peut voir que selon un troisième mode de réalisation du dispositif selon l'invention, celui-ci est similaire au mode de réalisation de la figure 7 à savoir qu'il comporte deux fentes parallèles longitudinales 57 créant deux brins latéraux 58 et un brin central 59, par contre il ne présente pas de zone de moindre résistance.

Il est utilisé de la manière suivante, le brin central 59 est écarté des brins latéraux 58 de manière à former une boucle dans laquelle peut être engagé un doigt par exemple.

On notera que les découpes longitudinales 5, 53 et 57 doivent être les plus étroites possible, afin de ne pas limiter la résistance de la bande 1.

Il va de soi que la présente invention ne saurait être limitée à la description qui précède de quelques-uns de ses modes de réalisation, susceptibles de subir un certain nombre de modifications sans pour autant sortir du cadre de l'invention.

## Revendications

1. Dispositif de collier de serrage en matière plastique ou analogue, utilisé pour maintenir entre-eux des fils ou des tubes, ou comme scellé, du type comprenant une partie (1) en forme de bande présentant sur au moins une face des crans transversaux (2), et à l'une des extrémités de ladite bande (1) un organe de blocage (3) comportant une fente transversale (30) pourvue intérieurement de moyens d'accrochage destinés a coopérer avec lesdits cr-ans (2) lorsque ladite bande (1) est introduite par son autre extrémité (41) dans ladite fente (30), caractérisé en ce que ladite bande crantée (1) comporte au niveau de sa partie extrême (4) destinée à être introduite dans ladite fente (30), au moins une découpe longitudinale (40; 5; 53) permettant de séparer des parties (42, 43; 50, 51; 54, 55) qui, par pliage, sont susceptibles d'être disposées transversalement de part et d'autre de ladite bande (1) afin de constituer un moyen de préhension.

2. Dispositif selon la revendication 1 caractérisé en ce que la ou les découpes (40) sont prolongées jusqu'à l'extrémité (41) de la partie extrême (4) de la bande (1).

3. Dispositif selon la revendication 1 caractérisé en ce que la ou les découpes (5; 53) sont pratiquées à une certaine distance de la partie extrême (4), et l'un (51; 55) au moins des brins (50, 51; 54, 55) ainsi créés est sécable à proximité de son extrémité du côté de l'organe de blocage (3).

4. Dispositif selon la revendication 3 caractérisé en ce que le ou les brins sécables (51; 55) comportent une zone (52, 56) de moindre résistance.

5. Dispositif selon la revendication 3 caractérisé en ce que le ou les brins sécables (51; 55) sont sectionnés d'origine.

6. Dispositif selon la revendication 1 caractérisé en ce que la ou les découpes (57) sont pratiquées à une certaine distance de la partie extrême (4), de manière que les brins (58, 59) ainsi créés puissent être écartés pour former une boucle permettant le passage d'un élément de traction.
